## Europäisches Patentamt
## European Patent Office
## Office européen des brevets

(19)

(11) Veröffentlichungsnummer: **0 056 597**
**B1**

(12) **EUROPÄISCHE PATENTSCHRIFT**

(45) Veröffentlichungstag der Patentschrift:
14.05.86

(51) Int. Cl.⁴: **C 04 B 38/06**, G 21 C 11/08, **C 04 B 35/64**

(21) Anmeldenummer: **82100143.5**

(22) Anmeldetag: **11.01.82**

---

(54) Wärmeisolierender keramischer Formkörper und Verfahren zu seiner Herstellung.

---

(30) Priorität: 16.01.81 DE 3101257

(43) Veröffentlichungstag der Anmeldung:
28.07.82 Patentblatt 82/30

(45) Bekanntmachung des Hinweises auf die Patenterteilung:
14.05.86 Patentblatt 86/20

(84) Benannte Vertragsstaaten:
AT BE CH DE FR GB IT LI LU NL SE

(56) Entgegenhaltungen:
DE - A - 2 435 437
DE - A - 2 512 597
DE - C - 490 597
FR - A - 1 346 570
US - A - 4 191 721
US - A - 4 221 594

(73) Patentinhaber: **INTERATOM Gesellschaft mit beschränkter Haftung, Friedrich-Ebert-Strasse, D-5060 Bergisch Gladbach 1 (DE)**

(72) Erfinder: **Tittizer, Gabriel, Dipl.-Ing., In den Erlen 22, D-5068 Odenthal-Eikamp (DE)**
Erfinder: **Matentzoglu, Nikolaus, Dipl.-Ing., Birkenweg 13, D-5100 Aachen (DE)**
Erfinder: **Klas, Ernst, Dipl.-Ing., Bergaggerstrasse 33, D-5204 Lohmar 21 (DE)**

(74) Vertreter: **Mehl, Ernst, Dipl.-Ing. et al, Postfach 22 01 76, D-8000 München 22 (DE)**

ACTORUM AG

**Beschreibung**

Die Erfindung betrifft einen wärmeisolierenden keramischen Formkörper und ein Verfahren zu seiner Herstellung gemäss dem Oberbegriff des Anspruchs 1. Bei den meisten keramischen Wärmeisoliermaterialien wird die schlechte Wärmeleitfähigkeit von Gasen ausgenutzt, indem durch eine bestimmte Verteilung und Grösse von Poren bestimmte Wärmeleitungseigenschaften erzielt werden. Es sind verschiedene Verfahren zur Herstellung solcher Poren in keramischen Werkstoffen bekannt, insbesondere das Beimischen eines später herausbrennbaren Materials wie z. B. Kohlenstoff. So wird in der US-A-4 221 594 ein Verfahren zur Herstellung eines porösen Keramikmaterials beschrieben, welches darin besteht, dass eine Grundmasse aus keramischem Material mit einem ausbrennbaren Stoff, insbesondere Kohlenstoff, vermischt wird, wobei das Gemisch in sauerstofffreier Atmosphäre gesintert und dabei oder anschliessend der herausbrennbare Stoff herausgebrannt wird. So entsteht ein poröses Material, welches gute Isolationseigenschaften aufweist.

Auch aus der FR-A-1 346 520 ist ein Verfahren zur Herstellung eines porösen keramischen Materials bekannt, bei dem als Ausgangsmaterial keramische Oxidgemische und Kohlenstoff dienen und der Kohlenstoff nach dem Sintern herausgebrannt wird.

Bei den bekannten Verfahren entstehen jedoch Materialien, die eine gleichmässige Verteilung von ungefähr runden Poren aufweisen, nämlich dort wo zu Beginn Körner des herausbrennbaren Materials vorhanden waren. Solche Materialien weisen bei günstigen thermischen Isolationseigenschaften oft keine genügende Festigkeit auf.

Aufgabe der vorliegenden Erfindung ist ein Verfahren, nach dem poröse keramische Formkörper hergestellt werden können, die bei guten wärmeisolierenden Eigenschaften und geringem spezifischem Gewicht, d. h. grosser Porösität, trotzdem eine gesteigerte Festigkeit gegenüber den bekannten Materialien aufweisen. Sie sollen beispielsweise für die Verwendung als Wärmeisolierung bei Helium-gefüllten Hochtemperaturkreisläufen geeignet sein. Dazu ist im allgemeinen erforderlich, dass die Porengrösse in dem Isoliermaterial kleiner als die mittlere freie Weglänge eines Helium-Atoms unter den betreffenden Betriebsbedingungen, beispielsweise 900 °C und etwa 40 bar Betriebsdruck, ist. Weitergehende Überlegungen haben gezeigt, dass es ausreicht, wenn die Poren in einem wärmeisolierenden Material zumindest in einer Dimension kleiner als die betreffende freie Weglänge sind, weil dadurch eine Konvektion innerhalb der Poren sicher vermieden wird.

Zur Herstellung eines solchen Isoliermaterials wird ein Verfahren nach Anspruch 1 vorgeschlagen. Dieses Verfahren geht von der Erkenntnis aus, dass unter sauerstofffreier Atmosphäre beim Sintern eines Gemenges aus Grundmasse für keramisches Material und einem sehr fein verteilten herausbrennbaren Stoff, wobei zumindest der herausbrennbare Stoff aus Mikrofasern besteht, der herausbrennbare Stoff zunächst in die Struktur eingebaut wird, während alle Hohlräume von der zuerst weich werdenden Komponente ausgefüllt werden. Lässt man nun bei einer erheblich unter der Sintertempratur liegenden Temperatur Sauerstoff an das Sintermaterial, so brennt der herausbrennbare Stoff unter Zurücklassung von röhrenförmigen Mikroporen heraus. Dabei ist darauf zu achten, dass die exotherme Reaktion die Temperatur des Materials nicht zu stark erhöht.

Würde man den herausbrennbaren Stoff beim Sintern und bei Sintertemperatur herausbrennen, so würden sich die winzigen Poren durch Zusammenschmelzen der übrigen Körner des keramischen Materials schliessen, was durch das erfindungsgemässe Verfahren vermieden wird. Durchmesser und Länge der entstehenden Poren hängen im wesentlichen von der Grösse der Fasern des herausbrennbaren Materials ab.

In besonderer Ausgestaltung der Erfindung wird in Anspruch 2 vorgeschlagen, als Ausgangsstoff ein Gemenge aus Aluminiumoxid, Siliciumoxid, Kaliumoxid und Kohlenstofffasern zu verwenden, wobei Kohlenstoff der herausbrennbare Stoff ist. Beimischungen anderer Materialien, z. B. Titanoxid, können Farbe und Strahlungseigenschaften beeinflussen. Dieses Gemenge wird unter sauerstofffreier Atomsphäre bei Temperaturen oberhalb von 1150 °C gesintert. Dabei hängt die genaue Höhe der Sintertemperatur von den Anteilen und Schmelzpunkten der einzelnen Komponenten ab. Anschliessend wird der Kohlenstoff mit Sauerstoff bei etwa 750 °C herausgebrannt. Als geeignete Ausgangsstoffe dienen auch Kaolin und Tonerde oder Mischungen daraus.

In spezieller Ausgestaltung der Erfindung wird in Anspruch 3 vorgeschlagen, den Kohlenstoff in Form von Aktivkohle beizufügen, und zwar je nach Anforderungen an das Material mit Anteilen zwischen 10 und 50%. Da sich gerade Aktivkohle in Form von Mikrofasern der gewünschten Grössenordnung herstellen lässt, eignet sie sich besonders als herausbrennbarer Stoff für die Erzeugung von röhrenförmigen Mikroporen.

Da die mechanische Festigkeit und die Abriebfestigkeit der Oberfläche eines nach diesem Verfahren hergestellten Formkörpers bei einer Zunahme des Porenanteils schlechter wird, wird in Anspruch 4 vorgeschlagen, den Formkörper aus mehreren Schichten mit verschiedenen Mischungsverhältnissen herzustellen. Auf diese Weise lassen sich beispielsweise im Inneren die gewünschten Wärmeisoliereigenschaften und im äusseren Teil die gewünschten mechanischen Eigenschaften verwirklichen und Stabilität und Oberflächenbeschaffenheit beeinflussen.

In weiterer Ausgestaltung dieses Gedankens wird in Anspruch 5 vorgeschlagen, den Formkörper vor dem Sintern mit einem Material, beispielsweise mit einer Schicht, deren Anteil Aktivkohle etwa 10% beträgt, zu beschichten, welches durch das Sintern abriebfest wird. Auf diese Weise erhält der Körper im wesentlichen seine gewünschten Wärmeisoliereigenschaften, besitzt aber an der Aussenseite eine bessere mechanische Beschaffenheit. Bei diesem Verfahren sind keine zusätzlichen Schritte erforderlich, da Sintern und anschliessendes Herausbrennen wie oben beschrieben erfolgen.

Der Anspruch 6 spezifiziert die Eigenschaften, die ein Gemenge zur Herstellung eines Wärmeisoliermaterials mit Mikroporen haben muss. Dabei wird die Porengrösse im wesentlichen durch Durchmesser und Länge der Mikrofasern des herausbrennbaren Stoffes und in geringem Umfang auch durch die Korngrösse der anderen Komponenten bestimmt. Dabei ist der Faserdurchmesser des herausbrennbaren Stoffes für Mikroporen kleiner als 1 µm zu wählen.

Zur Formgebung des Formkörpers und zur Verdichtung des Ausgangsmaterials ist es von Vorteil, das Gemenge gemäss Anspruch 7 in einer Pressform zu pressen.

Die im Anspruch 8 vorgeschlagene Behandlung des aus Mikrofasern bestehenden Gemisches bietet eine zusätzliche Möglichkeit der Beeinflussung der Eigenschaften des Formkörpers. Durch kontrolliertes Schleudern der Mischung, d.h. durch Schleudern mit definierter Beschleunigung, Drehachse und Dauer, kann die Schichtung und Ausrichtung der Mikrofasern beeinflusst werden. Da der Kohlenstoff leichter als die übrigen Mischungskomponenten ist, kann durch Schleudern der Porenanteil an der Aussenseite herabgesetzt werden, was eine abriebfeste Oberfläche zur Folge hat, während weiter innen besonders günstige Wärmeisolationseigenschaften entstehen. Ausserdem richten sich die Fasern teilweise aus, was die Festigkeit des entstehenden Formkörpers erhöht.

Anspruch 9 betrifft einen nach dem obigen Verfahren hergestellten porösen keramischen Formkörper.

In Ausgestaltung der Erfindung wird in Anspruch 10 vorgeschlagen, dass ein solcher poröser keramischer Formkörper aus mehreren Schichten mit unterschiedlichem Porenanteil bestehen soll. Auf diese Weise werden, wie oben schon erwähnt, die Anforderungen an Wärmeisolierung und mechanische Eigenschaften des Materials erfüllt.

Als Ausführungsbeispiel der Erfindung ist im folgenden die Herstellung eines keramischen mikroporösen wärmeisolierenden Formkörpers genau beschrieben:

Mit sehr fein gemahlenem Kaolin ($SiO_2$ und $Al_2O_3$) werden zwei Gemenge mit unterschiedlichem Kohlenstoffanteil hergestellt:

Gemenge A: 50% Kaolin
           50% Aktivkohle
Gemenge B: 80% Kaolin
           20% Aktivkohle

Beide Gemenge werden mit Wasser angefeuchtet. Am Boden einer Pressform wird zuerst das Gemenge B mit einer Schichtdicke von etwa 10 mm verteilt. Anschliessend folgt eine Schicht des Gemenges A von der gewünschten Dicke und schliesslich wieder eine etwa 10 mm dicke Schicht von B.

Durch einen Druck von etwa 60 N/cm² schrumpft die Probe auf ungefähr $1/_3$ der ursprünglichen Höhe. Nach dem Trocknen wird die Probe mit etwa 6 °C/min Temperaturerhöhung auf 1150 °C aufgeheizt. Dies geschieht unter Sauerstoffabschluss. Nach rund 4 Stunden wird die Temperatur auf ca. 750 °C reduziert und freie Luftzufuhr zur Probe gesichert. Nach einigen Stunden Oxidationszeit (abhängig von der Dicke der Probe) ist der Kohlenstoff herausgebrannt.

Das mittlere spezifische Gewicht der Probe beträgt dann etwa $\rho_m$ = 0,6 kg/l, die Wärmeleitung etwa $\lambda_m$ = 0,29 W/mK (in He bei 400 °C). Auch bei schnellem Aufheizen oder Abkühlen entstehen keine Risse in dem Material.

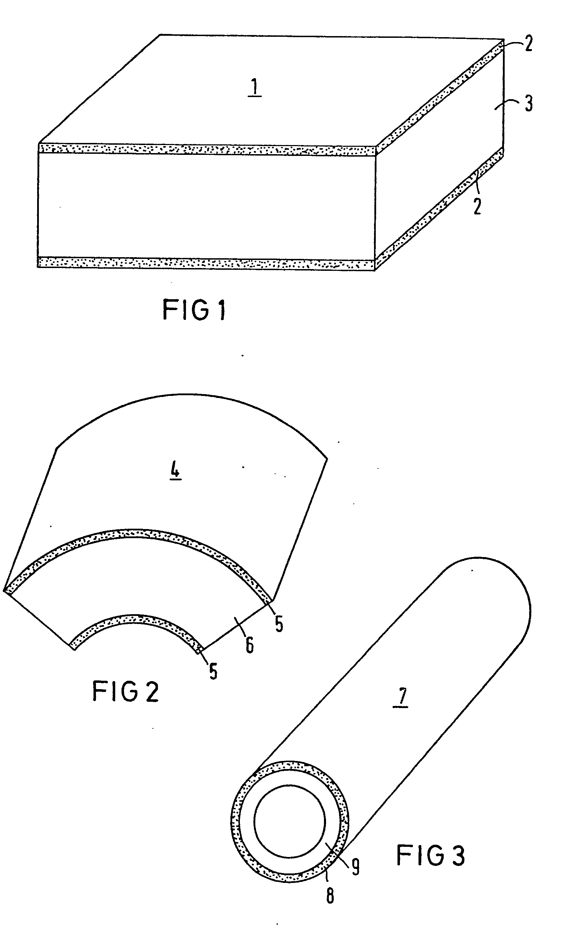

Ausführungsbeispiele der Erfindung sind auch in der Zeichnung dargestellt, und zwar zeigen die Figuren 1, 2 und 3 verschiedene Formkörper, welche aus dem erfindungsgemässen Material und nach dem oben erwähnten Verfahren hergestellt sind.

Figur 1 zeigt eine Wärmeisolierplatte 1, deren innere Schicht 3 aus dem Gemenge A hergestellt ist und deren Ober- und Unterseite aus je einer Schicht 2 des Gemenges B besteht. Diese Wärmeisolierplatte hat im inneren Bereich 3 gute Wärmeisoliereigenschaften und besitzt durch die äussere Beschichtung 2 abriebfeste Oberflächen und grosse Stabilität. Solche Platten können, gegebenenfalls mit Nut und Feder versehen, zur Innenisolierung eines heliumgefüllten Druckbehälters dienen.

Figur 2 zeigt ein weiteres nach dem erfindungsgemässen Verfahren hergestelltes Formstück 4, welches als Hohlzylindersegment ausgebildet ist. Dieses Hohlzylindersegment besteht aus einer Schicht 6, welche aus dem Gemenge A hergestellt ist, wobei die Aussen- und Innenseite des Hohlzylinders wiederum durch eine dünne Auflage 5 des Gemenges B verstärkt und geschützt wird. Statt eines Hohlzylindersegmentes könnte dieser Formkörper auch ein Hohlkugelsegment sein, je nach der Form des zu isolierenden Behälters.

In Figur 3 ist ein Rohr 7, dessen Innenteil 9 aus dem Gemenge A besteht und welches auf der Aussenseite mit einer Schicht 8 des Gemenges B versehen ist. Dieses Rohr 7 dient zur Innenisolierung eines in der Zeichnung nicht dargestellten Hüllrohres, wobei die abriebfeste Oberfläche aus der Schicht 8 besonders wichtig ist, wenn unterschiedliche Ausdehnungskoeffizienten von Hüllrohr und Innenisolierung zu einer Reibung zwischen Isoliermaterial und Rohrwand führen.

Da das Beschichten von Formkörpern aus dem Gemenge A auch durch Besprühen mit einer Emulsion des Gemenges B vorgenommen werden kann, ist es möglich, Formkörper jeder Gestalt herzustellen.

Besonders beim Herstellen von Hohlrotationskörpersegmenten, die mechanisch belastbar sein sollen, lässt sich durch Schleudern des Hohlrotationskörpers um seine Rotationsachse eine vorteilhafte Ausrichtung der Fasern und Verteilung des Porenanteils erreichen.

## Patentansprüche

1. Verfahren zur Herstellung eines Formkörpers aus einem porösen Wärmeisoliermaterial, wobei als Ausgangsstoff ein Gemenge aus Grundmasse für keramisches Material und einem sehr fein verteilten herausbrennbaren Stoff dient und wobei dieses Gemenge in die gewünschte Form gebracht und unter sauerstofffreier Atmosphäre bei Sintertemperatur gesintert wird, dadurch gekennzeichnet, dass die Mischungskomponenten, zumindest aber der herausbrennbare Stoff aus Mikrofasern bestehen und dass nach dem Sintern der herausbrennbare Stoff bei erheblich unter Sintertemperatur liegender Temperatur herausgebrannt wird.

2. Verfahren nach Anspruch 1, dadurch gekennzeichnet, dass als Ausgangsstoff ein Gemenge aus Kohlenstoff, Aluminiumoxid, Siliziumoxid und Kaliumoxid dient und der Kohlenstoff nach dem Sintern bei etwa 750 °C herausgebrannt wird.

3. Verfahren nach Anspruch 2, dadurch gekennzeichnet, dass der Kohlenstoff in Form von Aktivkohle mit einem Anteil zwischen 10 und 50% beigefügt wird.

4. Verfahren nach einem der vorhergehenden Ansprüche, dadurch gekennzeichnet, dass der Formkörper aus mehreren Schichten mit verschiedenen Mischungsverhältnissen hergestellt wird.

5. Verfahren nach einem der vorhergehenden Ansprüche, dadurch gekennzeichnet, dass der Formkörper vor dem Sintern mit einem Material beschichtet wird, welches durch das Sintern abriebfest wird.

6. Verfahren nach einem der vorhergehenden Ansprüche, dadurch gekennzeichnet, dass der Faserdurchmesser des herausbrennbaren Stoffes kleiner als 1 μm ist.

7. Verfahren nach einem der vorhergehenden Ansprüche, dadurch gekennzeichnet, dass das Gemenge zur Herstellung des Formkörpers in einer Pressform gepresst wird.

8. Verfahren nach Anspruch 7, dadurch gekennzeichnet, dass die Mikrofasern gemischt und durch kontrolliertes Schleudern in die gewünschte Schichtung und Ausrichtung gebracht werden.

9. Formkörper, hergestellt nach dem Verfahren gemäss einem der vorhergehenden Ansprüche, dadurch gekennzeichnet, dass der Formkörper röhrenförmige Mikroporen aufweist, vorzugsweise mit einem Durchmesser kleiner 1 μm.

10. Formkörper nach Anspruch 9, insbesondere Hohlrotationskörpersegment, dadurch gekennzeichnet, dass der Formkörper Schichten mit unterschiedlichem Anteil Mikroporen aufweist.

## Claims

1. Process for the production of a shaped body of a porous heat insulating material, in which a mixture of a basic mass for ceramic material and a very finely distributed material which can be burnt away serves as starting material, and in which the mixture is brought into the required shape and sintered in an oxygen-free atmosphere at a sintering temperature, characterised in that the components of the mixture, at least the material which can be burnt away, consist of mcirofibres, and that after the sintering, the material which can be burnt away, is burnt away at a temperature which lies considerably below the sintering temperature.

2. A process as claimed in Claim 1, characterised in that a mixture of carbon, aluminium oxide, silicon oxide and calcium oxide serves as starting material and after the sintering, the carbon is burnt away at approximately 750 °C.

3. A process as claimed in Claim 2, characterised in that the carbon is added in the form of active carbon in a percentage of between 10 and 50%.

4. A process as claimed in one of the preceding Claims, characterised in that the shaped body is produced from a plurality of layers having different mixture proportions.

5. A process as claimed in one of the preceding Claims, characterised in that prior to sintering, the shaped body is coated with a material which becomes resistant to abrasion on sintering.

6. A process as claimed in one of the preceding Claims, characterised in that the fibre diameter of the material which can be burnt away, is smaller than 1 μm.

7. A process as claimed in one of the preceding Claims, characterised in that, in order to produce the shaped body, the mixture is pressed in a mould.

8. A process as claimed in Claim 7, characterised in that the micro-fibres are mixed and are brought into the required layering alignment by controlled centrifuging.

9. A shaped body which is produced in accordance with the process as claimed in one of the preceding Claims, characterised in that the shaped body has tubular micro-pores which preferably have a diameter smaller than 1 μm.

10. A shaped body as claimed in Claim 9, in particular a segment of a hollow body of rotation, characterised in that the shaped body has layers having different amounts of micro-pores.

## Revendications

1. Procédé de préparation d'un corps préformé en un matériau poreux thermiquement isolant, qui consiste à se servir comme matière de départ d'un mélange constitué d'un matrice pour matériau céramique et d'une matière à l'état très finement divisé et susceptible d'être éliminée par calcination et à mettre ce mélange à la forme souhaitée et à le fritter à une température de frittage et sous une atmosphère exempte d'oxygène, caractérisé en ce que les constituants du mélange ou du moins la matière susceptible d'être éliminée par calcination, sont constitués de fibres microscopiques et en ce qu'il consiste à éliminer par calcination après le frittage la substance susceptible d'être éliminée par calcination à une température bien inférieure à la température de frittage.

2. Procédé suivant la revendication 1, caractérisé en ce qu'il consiste à se servir, comme matière de départ d'un mélange de carbone, d'oxyde d'aluminium, d'oxyde de silicium et d'oxyde de potassium et à éliminer, après le frittage le carbone à 750°C environ.

3. Procédé suivant la revendication 2, caractérisé en ce qu'il consiste à ajouter le carbone sous forme de charbon actif en une proportion comprise entre 10 et 50%.

4. Procédé suivant l'une des revendications précédentes, caractérisé en ce qu'il consiste à préparer le corps préformé en plusieurs couches ayant des rapports de mélange différents.

5. Procédé suivant l'une des revendications précédentes, caractérisé en ce qu'il consiste à revêtir le corps préformé, avant le frittage, d'un matériau que le frittage rend résistant à l'abrasion.

6. Procédé suivant l'une des revendications précédentes, caractérisé en ce que le diamètre des fibres de la matière susceptible d'être éliminée par calcination est inférieur à 1 µm.

7. Procédé suivant l'une des revendications précédentes, caractérisé en ce qu'il consiste à comprimer dans une presse, le mélange pour la préparation du corps préformé.

8. Procédé suivant la revendication 7, caractérisé en ce qu'il consiste à mélanger les fibres microscopiques et à les mettre à la stratification et à l'orientation souhaitée par centrifugation contrôlée.

9. Corps préformé préparé par le procédé suivant l'une des revendications précédentes, caractérisé en ce que le corps préformé présente des pores microscopiques de forme tubulaire, ayant de préférence un diamètre inférieur à 1 µm.

10. Corps préformé suivant la revendication 9, notamment segment de corps creux de révolution, caractérisé en ce que le corps préformé présente des couches ayant des proportions différentes microscopiques.

FIG 1

FIG 2

FIG 3